# EUROPEAN PATENT SPECIFICATION

(11) **EP 4 130 977 B1**
(45) Date of publication and mention of the grant of the patent: **29.01.2025**
(21) Application number: 21781090.2
(22) Date of filing: 12.03.2021
(51) Int. Cl.: G06F 7/58

(54) **QUANTUM RANDOM NUMBER GENERATOR**
QUANTENZUFALLSZAHLENGENERATOR
GÉNÉRATEUR QUANTIQUE DE NOMBRES ALÉATOIRES

(30) Priority: 03.04.2020 ES 202030271
(43) Date of publication of application: 08.02.2023
(73) Proprietor: Universidad de Vigo, 36310 Vigo (Pontevedra) (ES)
(72) Inventor: DÍAZ OTERO, Francisco, Javier, 36310 VIGO (Pontevedra) (ES)
(74) Representative: Herrero & Asociados, S.L.
(86) International application number: PCT/ES2021/070179
(87) International publication number: WO 2021/198543

(56) References cited:
- WO-A1-2016/099565
- CN-A- 110 187 867
- GB-A- 2 540 589
- THOMAS ROGER ET AL: "Real-time inteferometric quantum random number generation on chip", ARXIV.ORG, CORNELL UNIVERSITY LIBRARY, 201 OLIN LIBRARY CORNELL UNIVERSITY ITHACA, NY 14853, 5 June 2019 (2019-06-05), XP081373272, DOI: 10.1364/JOSAB.36.00B137
- ABELLÁN C. ET AL: "Ultra-fast quantum randomness generation by accelerated phase diffusion in a pulsed laser diode", OPTICS EXPRESS, vol. 22, no. 2, 27 January 2014 (2014-01-27), pages 1645 - 1636, XP055926246, Retrieved from the Internet <URL:https://opg.optica.org/DirectPDFAccess/FB7DB20D-3EED-46D7-B7D0BCA8967D099C_277045/oe-22-2-1645.pdf?da=1&id=277045&seq=0&mobile=no> DOI: 10.1364/OE.22.001645
- IMRAN MUHAMMAD, SORIANELLO VITO, FRESI FRANCESCO, POTÌ LUCA, ROMAGNOLI MARCO: "Quantum Random Number Generator Based on Phase Diffusion in Lasers using an On-Chip Tunable SOI Unbalanced Mach-Zehnder Interferometer (uMZI", 2020 OPTICAL FIBER COMMUNICATIONS CONFERENCE AND EXHIBITION (OFC), OSA., 3 August 2020 (2020-08-03), pages 1 - 3, XP033767313, DOI: 10.1364/OFC.2020.M1D.5
- ABELLÁN C., AMAYA W., JOFRE M., CURTY M., ACÍN A., CAPMANY J., PRUNERI V., MITCHELL M. W.: "Ultra-fast quantum randomness generation by accelerated phase diffusion in a pulsed laser diode.", OPTICS EXPRESS UNITED STATES, vol. 22, no. 2, 27 January 2014 (2014-01-27), pages 1645 - 1654, XP055926246, ISSN: 1094-4087, DOI: 10.1364/OE.22.001645 pubmed:24515170

## Description

### OBJECT OF THE INVENTION

The present invention is related to the industry engaged to the manufacture of optical integrated circuits or photonic integrated circuits (PIC).

The present invention relates to quantum random number generators (QRNG) and, more particularly, to a QRNG device integrated in a photonic integrated circuit.

### BACKGROUND OF THE INVENTION

Randomness is a very multidisciplinary topic spanning from math, engineering, computer science, philosophy to physics.

There are different types of random number generators and their properties are given below:
- Pseudorandom number generator (PRNG): Generation of apparently random numbers by means of an algorithm. The obtained sequence is difficult to distinguish from a purely random sequence, but its order is completely predefined. Its main advantages are the ease and speed to generate large amounts of numbers.
- True random number generator (TRNG), where in turn two types are distinguished:
   - Physical random number generator: Generation of random numbers based on measurements of parameters with chaotic behavior of classical systems. The sequences obtained are usually considered random, but at a more fundamental level they are deterministic in nature. When being well implemented, they offer greater unpredictability and irreproducibility than PRNGs, but the numbers are more difficult and slower to generate.
   - Quantum random number generator (QRNG): Generation of random numbers by using uncertainty inherent in quantum physics. They allow obtaining sequences from purely random processes, but the measurements are superimposed on components of a classical nature. The generation rate varies depending on the type of QRNG used.

Considering these types of random number generators and their properties, it is not surprising that quantum random number generators are the future of cybersecurity.

The first random number generators were based on physical processes inherent in chemical or atomic mechanisms. Later they were based on electronic mechanisms. As the requirements of randomness grew, these random numbers were not robust enough for their intended use, since they were based on information about the internal state of an algorithm that described a physical process whether chemical, atomic or electronic. That is why, in the mid-1990s, methods based on random mechanisms based on quantum processes and, therefore, imprinted in physical nature itself, were chosen to obtain this type of numbers.

Fundamentally, different solutions have been experimented to obtain random numbers based on the quantum nature of light, thus obtaining the so-called optical QRNGs. Quantum random number generators (QRNG) are random physical devices based on quantum sampling systems with macroscopically observable parameters that randomly vary on a dynamic basis, such as the phase or intensity of a laser or optical amplifier. For example, there are QRNG devices that are based on the phase noise speed of the Continuous Wave (CW) laser, on vacuum fluctuations, on the arrival time of photons, or on the use of Amplified Spontaneous Emissions (ASEs).

The schemes based on the generation and measurement of phase noise have many advantages over the rest of the schemes mentioned above, regardless of the application to which they are intended, because:
- They use standard components of commercial application
- They are fast, have a higher rate of random number generation
- They are robust against amplitude and phase fluctuations.

Various authors, in recent publications, show the operation of homodyne detectors in laboratory experiments that can be discretized for commercial use. All these cases have been developed in discrete components (laboratory components or commercial components) and not integrated into a single element.

Recently, several authors have developed several QRNGs in the laboratory that use photonic integrated circuits (PIC). Depending on the manufacturing technology used, there are various QRNG devices:
- In a first implementation that combines two lasers, an optical coupler and two photodetectors, it has been possible to generate random numbers in the gigahertz (GHz) regime.
- In another implementation using surface plasmons (not capable of being manufactured in a standard way), QRNGs have been produced at megahertz (MHz) speeds.
- Other demonstrations based on silicon photonics have produced QRNG at GHz rates using on-chip Mach-Zehnder interferometers.

On the other hand, there are several patent documents related to methods of generating said random numbers:
US9218160 describes a procedure for generating random numbers through the phase noise of a laser cavity, wherein the procedure comprises operating a single-mode laser with high modulation bandwidth by means of an electric pulse generator, transforming the previously produced random phase optical pulses into optical pulses with random amplitude and detecting the resulting random amplitude signals by means of a fast photodiode. The numbers thus produced are truly random.
US2017/0115960 describes a method based on a multimode laser cavity with periodic modulation of a net gain, where the method comprises operating a multimode laser in a laser cavity with periodic modulation of a net gain and detecting the random intensity pattern produced by the intermodal beating that occurs within the laser cavity. The numbers produced are truly random and a minimum number of elements are required for operating the system.

The objective technical problem that arises is to provide a quantum random number generator (QRNG) that can be manufactured at low cost and by volume.

### DESCRIPTION OF THE INVENTION

The present invention is useful for solving the problem mentioned above, through the provision in a monolithic integrated photonic circuit of indium phosphide (InP) of a device for the generation of random numbers (QRNG) based on the combination of phase noise produced in a laser cavity and interferometry.

One aspect of the invention relates to a quantum random number generator (QRNG) device comprising the following components integrated into a photonic integrated circuit or PIC (chip), manufactured using InP technology:
- a light source comprising an (first) integrated gain switching laser, at the front end of the QRNG generator, which is single-mode and configured to achieve a quantum noise level between optical pulses to obtain phase randomness between optical pulses;
- two Mach-Zehnder interferometers, MZI connected in series, wherein a first MZI interferometer is symmetrical and configured to receive the output signal from the light source and balance the signal power at the input of a second MZI interferometer, and wherein the second MZI interferometer is asymmetric and configured to convert random phase variations between consecutive optical pulses into amplitude variations; and
- a single photodetector integrated at the back end of the QRNG generator and configured to detect the amplitude variations of the optical pulses at the output of the second MZI interferometer, converting the variations into electrical signals to be delivered to one of the PIC circuit outputs.

In a preferred embodiment, the light source integrated in the PIC circuit may comprise a second gain switching laser, the output signal of which is coupled to the output signal of the first laser. Both lasers connected as possible sources of phase noise allow frequency multiplexing and double the random bit rate generated. In a possible embodiment, the generated phase noise is produced using a Fabry-Perot cavity with distributed Bragg reflectors, DBR.

The advantages of the present invention compared to the previous state of the art and in relation to currently existing integrated devices are fundamentally:
- It allows a high degree of repeatability, standardization and reliability in the manufacturing process of the QRNGs integrated in the PIC, so that they can be manufactured at low cost and by volume. The proposed random number generator device is manufactured in indium phosphide (InP) technology in a commercial integrated monolithic platform, which has the mentioned advantages. InP technology allows integrating all active and passive devices on a single chip, while also maintaining polarization.
- The proposed integrated device constitutes a random number generator (QRNG) based on the phase noise produced in a laser cavity that is also autonomous and self-contained. In other words, in the same integrated circuit (chip) both the active devices (lasers and photodetectors) and the passive devices (waveguides and Mach-Zehnder interferometers) necessary for the correct operation of the generator have been introduced. This feature also differentiates this chip and all those made in InP, from those made in silicon (Si).
- Compared to other QRNG manufactured in monolithic integrated InP technologies, this invention requires only one laser as active device, instead of two lasers, thus reducing the possibility of operation failure and providing greater ease of control of the point of operation of a single laser. In addition, the QRNG device of the invention requires a single photodetector device and not two, like other existing QRNGs, since it does not use homodyne detection to extract random numbers. The use of two photodetectors, in addition to increasing the possibility of device failure, implies a correct characterization of both elements (which must be as identical as possible) and the extraction of the pulses in the same flat area of the spectrum of both photodetectors. Consequently, the post-processing of the output pulses of the photodetector, which in the present invention is only one, is simpler than the post-processing of the QRNG with two photodetectors.
- The chip on which this device is contained has electrical inputs and outputs and all the required components built in, so from the electrical pins or pads outwards, it can be operated and wired like a normal electronic chip, despite using photonics inside.
- Total on-chip device footprint is the smallest of InP's integrated QRNGs, 9mm2.
- The device operates in the GHz regime. In a preferred embodiment, the generated bit rate is 1.8Gbps.
- The device is tunable within its spectral free range, which allows adjustment of the generated bit rate by appropriately tuning the asymmetric Mach-Zehnder interferometer used to convert random phase noise into random amplitudes.
- The device also has a second symmetric Mach-Zehnder interferometer, which allows the adjustment of the power of the pulses that run through both branches of the asymmetric interferometer and, therefore, a collision with the maximum possible level of extinction.
- The device has frequency multiplexing capacity, through the use of two lasers connected as possible sources of phase noise that, when both operate slightly out of tune in frequency, manage to double the rate of random bits generated, by doubling the bits into parallel channels of frequency. The generated phase noise is produced, in a preferred embodiment, through a DBR laser, with the ability to provide high output optical power, high optical efficiency and reduced line width.

### BRIEF DESCRIPTION OF THE FIGURES

A series of drawings that help to better understand the invention and that are expressly related to an embodiment of said invention that is presented as a nonlimiting example of it are briefly described below.
FIGURE 1.- Shows a block diagram of the architecture of the QRNG integrated device, according to a preferred embodiment of the invention.
FIGURE 2.- Shows a block diagram of the first laser in correspondence with its integration in the integrated QRNG device.
FIGURE 3.- Shows a block diagram of the second laser in correspondence with its integration in the integrated QRNG device.
FIGURE 4.- Shows a chip with the integrated QRNG device and different test structures of the device.

### PREFERRED EMBODIMENT OF THE INVENTION

An integrated device for the generation of random numbers, QRNG, is proposed, which is based on a procedure for the generation of phase noise of a laser, followed by interferometry, carried out in a generic process of monolithic photonic integration of indium phosphide, InP.

The aforementioned procedure is based on the fact that at the output of a laser there is a random phase of quantum origin that can be used to produce random bits. Within the cavity of a single-mode semiconductor laser, spontaneous emission causes fluctuations in the output field. This phase noise, also known as phase diffusion, comes from a combination of different quantum effects. Although direct measurement of the phase of an optical signal is not technologically feasible, an asymmetric or unbalanced Mach-Zehnder interferometer, MZI, can translate phase differences into amplitude variations.

In said asymmetric or unbalanced MZI, one of the branches introduces a delay τ with respect to the other branch. Assuming a variable or slow amplitude variation in each branch, the output has an average constant level and the amplitude at the interferometer output ports can be measured with standard high-speed optical detectors. If the delay introduced is well above the coherence time of the laser, τ » τcoh, the phase difference Δφ(t) is a Gaussian random variable with an average approaching 0. In that case, if the detector amplitude is sampled with a time difference between the samples such that Δt » τ + τcoh, the resulting amplitudes are independent. These amplitudes are the random variables used by the proposed integrated QRNG device.

For the operation of this QRNG, at least one gain switching laser is required that produces periodic pulses that propagate through a Mach-Zehnder interferometer, MZI, and a photodetector that converts the pulses of light into electrical signals. The amplitudes obtained are random and their transmission rate is in the GHz range.

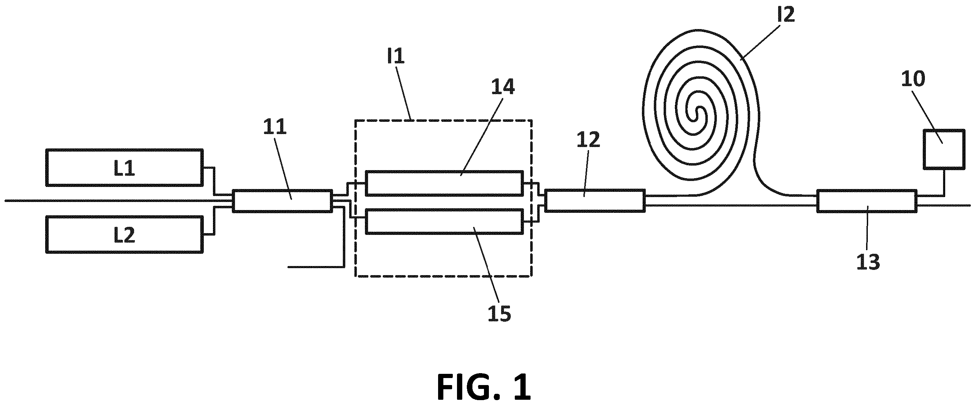

Figure 1 shows the components of the integrated QRNG device, according to a possible embodiment:
- two integrated gain switching lasers (L1, L2);
- two Mach-Zehnder interferometers, MZI (I1, I2) connected in series; and
- an integrated photodetector (10) which at the end of the circuit converts the light into an electrical signal.

The first interferometer MZI (I1), which is symmetrical, balances the power of the input to the arms of the second interferometer MZI (I2) to obtain a maximum extinction ratio at its output; while the second interferometer MZI (I2), which is asymmetric, converts the random phase variations between the consecutive optical pulses into amplitude variations, delaying exactly one bit period in its asymmetric arm, which the photodetector (10) detects.

In addition, the existence of two connected laser sources (L1, L2) allows a multiplexing range within the frequency domain, being able to double the random bit generation rate. The two lasers (L1, L2) are essentially single-mode with the ability to achieve a quantum noise level between pulses. The single-mode condition is necessary for an efficient interference between the pulses in the second MZI interferometer (I2), while the condition of reaching a quantum noise level between pulses is necessary to obtain phase randomness between the pulses. Furthermore, both lasers (L1, L2) use a Fabry-Perot cavity with distributed Bragg reflectors, DBR, which function as mirrors providing high output optical power, high optical efficiency and reduced line width.

Optionally, the QRNG integrated device comprises multimode interference couplers (11, 12, 13) that can be 3x3 MMI couplers (11) or 2x2 MMI couplers (12, 13). Multimode interference couplers (11, 12, 13) or MMI (MultiMode Interference) couplers are used to coherently join signals within the same waveguide. Specifically, the 3x3 MMI coupler (11) allows the signals from both lasers (L1, L2) to be joined in gain switching and, furthermore, to leave open the option for the optical signal to come from an external light source. Likewise, the output of the 3x3 MMI coupler (11) can have a component with an optical output to the outside of the chip in order to have a perfect monitoring of the laser source and guarantee the correct operation of the QRNG.

The first MZI interferometer (I1) or symmetrical Mach-Zehnder modulator, with two EOPM (Electro Optic Phase Modulation) arms or electro-optic phase modulation branches (14, 15), balances the input power to the arms of the second MZI interferometer (I2) to obtain a maximum extinction ratio at its output. In a preferred embodiment, the length of the electro-optical phase modulation branches (14, 15) of this first MZI interferometer (I1) that allow the correct operation of the device is 2mm. The phase shift in the upper branch (14) necessary for this extinction ratio is obtained at -5.66V.

The second MZI interferometer (I2) converts the random phase variations between the consecutive optical pulses into amplitude variations, delaying exactly one bit period between consecutive pulses, which the photodetector (10) subsequently detects. In a preferred embodiment, the asymmetric arm of this second MZI interferometer (I2) has a length of 65.4mm. At the output of the second MZI interferometer (I2), random pulses with a mean peak voltage of 40.4mV and a period of 797.47ps are obtained. These pulses are sent to the photodetector (10), which in a preferred embodiment is a 100um photodetector, with a bandwidth of 10GHz and a dark current of 50nA at -5V. The photodetected electrical current is post-processed outside the QRNG operating line ("offline") for the definitive extraction of random bits.

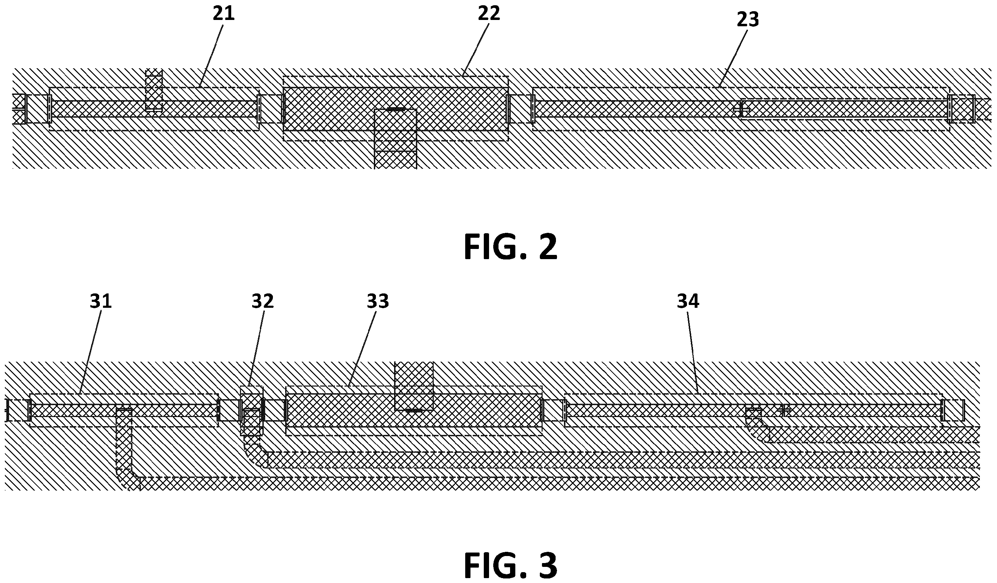

Figure 2 shows the structure of the first laser (L1) or upper laser, because it is located above the second laser (L2) or lower laser in the integrated circuit. The first laser (L1) has two distributed Bragg reflectors, DBR, wherein a first DBR (21) is connected to a second DBR (23) through a SOA (Semiconductor Optical Amplifier) amplifier or semiconductor optical amplifier (22). The features of the first laser (L1) for the correct operation of the QRNG device, according to a preferred embodiment, are:
- Cavity length with gain: 340 µm
- Length of the first DBR (21): 250 µm
- Length of the second DBR (23): 500 µm
- Pitch gratings: 237.5 µm

Figure 3 shows the structure of the second laser (L2) which also has two distributed Bragg reflectors, DBR, wherein a first DBR (31) is connected to a second DBR (34) through a semiconductor optical amplifier (33) before which a saturable absorbent (32) is used. The features of the second laser (L2) for the correct operation of the QRNG device, according to a preferred embodiment, are:
- Cavity length with gain: 340 µm
- Length of the first DBR (31): 250 µm
- Length of the second DBR (34): 500 µm
- Pitch gratings: 237.5 µm
- Saturable absorbent length (32): 30 µm

At the output of the lasers (L1, L2) a power of 21dBm at 1.245GHz in radiofrequency is provided, operating in gain switching, with a laser modulation current of 19mA.

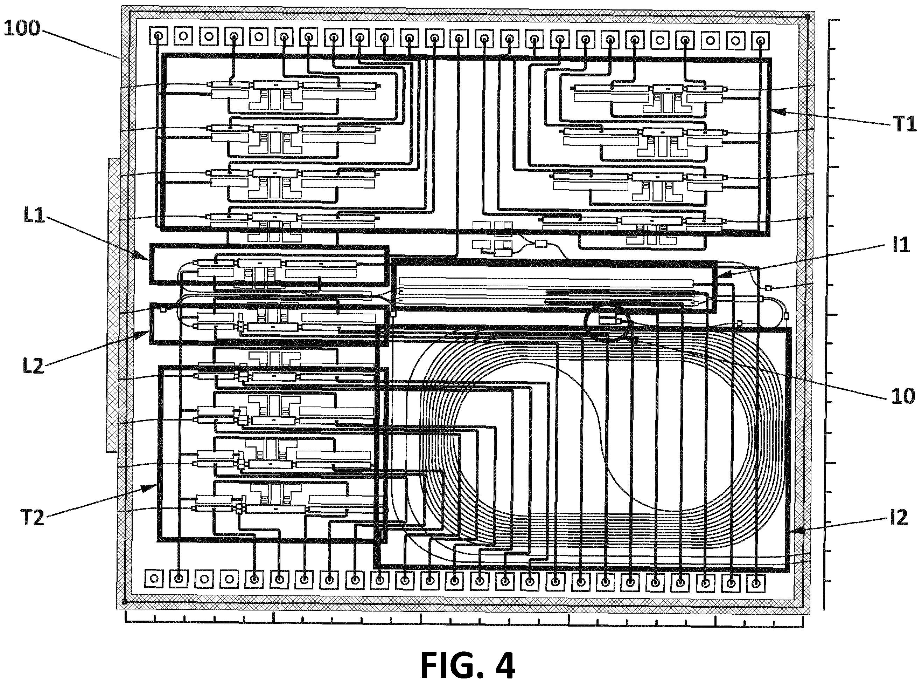

The QRNG device described is within a chip in which different test structures can also be integrated (T1, T2) for different configurations of DBR lasers of the device, as shown in Figure 4. In a preferred embodiment, the device is integrated on a 4x4.6mm chip as a photonic integrated circuit, PIC, specifically designed to be manufactured on InP technology, in a generic monolithic integration process available through multi-project manufacturing rounds. Said PIC has only electrical inputs and outputs towards the outside, being therefore self-contained and autonomous in its optical operation. The QRNG device integrated into the 4x4.6 mm² chip measures 4×2.1 mm², occupying only a 50% footprint of the total chip surface. Thus, the footprint of the QRNG device within this chip is 9 mm², being the smallest of the QRNG integrated in InP.

In addition, there is an optional feature of this QRNG device, which consists of the possibility of externally injecting an alternative light source to the integrated lasers, in order to allow the correct operation of the device even in the event of failure of the active devices integrated in this PIC.

## Claims

1. A quantum random number generator, QRNG, comprising integrated into a chip (100), which is a photonic integrated circuit, PIC, manufactured using InP technology, with electrical inputs and outputs, the following components connected from a front end to a back end of the QRNG generator:
- a light source comprising a first gain switching laser (L1) integrated in the front end of the QRNG generator, wherein the first laser (L1) is single-mode with the ability to reach a quantum noise level between optical pulses to obtain phase randomness between optical pulses;
- two Mach-Zehnder interferometers, MZI (I1, I2) connected in series, wherein a first MZI interferometer (I1) is symmetrical and configured to receive the output signal from the light source and balance the signal power at the input of a second MZI interferometer (I2), and wherein the second MZI interferometer (I2) is asymmetric and configured to convert random phase variations between consecutive optical pulses into amplitude variations; and
- a single photodetector (10) integrated at the back end of the QRNG generator and configured to detect the amplitude variations of the optical pulses at the output of the second MZI interferometer, converting the variations into electrical signals to be delivered to one of the PIC circuit outputs.

2. The QRNG generator according to claim 1, wherein the light source integrated in the PIC circuit further comprises a second gain switching laser (L2) integrated in the front end of the QRNG generator and whose output signal is joined to the output signal of the first laser (L1), wherein both lasers (L1, L2) use a Fabry-Perot cavity with distributed Bragg reflectors, DBR.

3. The QRNG generator according to claim 2, wherein the two lasers (L1, L2) are configured to operate out of tune in frequency.

4. The QRNG generator according to any of claims 2-3, further comprising a multimode interference coupler, MMI, which is a 3x3 MMI coupler (11) that joins the output signals of the two lasers (L1 , L2) into the output signal of the light source sent to the first interferometer MZI (I1).

5. The QRNG generator according to any of the preceding claims, further comprising an input to inject an external light source, in the event of failure of the laser light source integrated in the PIC circuit.

6. The QRNG generator according to claims 4 and 5, wherein the 3x3 MMI coupler (11) has an input to the light source integrated in the PIC circuit and an input to the external light source.

7. The QRNG generator according to any of claims 4-6, wherein the 3x3 MMI coupler (11) has an external optical output to monitor the light source integrated in the PIC circuit.

8. The QRNG generator according to any of the preceding claims, wherein the chip has dimensions of 4 millimeters long by 4.6 millimeters wide.

9. The QRNG generator according to claim 1, wherein it has a footprint inside the chip which is 9 mm².

10. The QRNG generator according to any of the preceding claims, further comprising multimode interference couplers, MMI which are two 2x2 MMI couplers (12, 13), wherein a first 2x2 MMI coupler (12) is connected between the first MZI interferometer (I1) and the second MZI interferometer (I2), and a second 2x2 MMI coupler (13) is connected between the second MZI interferometer (I2) and the photodetector (10).

## Patentansprüche

1. Quantenzufallszahlengenerator, QRNG-Generator, der in einen Chip (100) integriert ist, bei dem es sich um eine photonische integrierte Schaltung, PIC, handelt, die unter Verwendung der InP-Technologie hergestellt wurde, mit elektrischen Eingängen und Ausgängen, umfassend die folgenden Komponenten, die von einem vorderen Ende zu einem hinteren Ende des QRNG-Generators verbunden sind:
- eine Lichtquelle, die einen ersten verstärkungsschaltenden Laser (L1) umfasst, der in das vordere Ende des QRNG-Generators integriert ist, wobei der erste Laser (L1) ein Einmodenlaser mit der Fähigkeit ist, einen Quantenrauschpegel zwischen optischen Impulsen zu erreichen, um einen Phasenzufall zwischen optischen Impulsen zu erreichen;
- zwei Mach-Zehnder-Interferometer, MZI (I1, I2), die in Reihe geschaltet sind, wobei ein erstes MZI-Interferometer (I1) symmetrisch und so konfiguriert ist, dass es das Ausgangssignal von der Lichtquelle empfängt und die Signalleistung am Eingang eines zweiten MZI-Interferometers (I2) ausgleicht, und wobei das zweite MZI-Interferometer (I2) asymmetrisch und so konfiguriert ist, dass es zufällige Phasenvariationen zwischen aufeinanderfolgenden optischen Impulsen in Amplitudenvariationen umwandelt; und
- einen einzelnen Fotodetektor (10), der am hinteren Ende des QRNG-Generators integriert und so konfiguriert ist, dass er die Amplitudenvariationen der optischen Impulse am Ausgang des zweiten MZI-Interferometers erfasst und die Variationen in elektrische Signale umwandelt, um diese an einen der PIC-Ausgänge zu leiten.

2. QRNG-Generator nach Anspruch 1, wobei die in die PIC-Schaltung integrierte Lichtquelle ferner einen zweiten verstärkungsschaltenden Laser (L2) umfasst, der in das vordere Ende des QRNG-Generators integriert ist und dessen Ausgangssignal mit dem Ausgangssignal des ersten Lasers (L1) zusammengeführt ist, wobei beide Laser (L1, L2) eine Fabry-Perot-Kavität mit verteilten Bragg-Reflektoren (DBR) verwenden.

3. QRNG-Generator nach Anspruch 2, wobei die beiden Laser (L1, L2) konfiguriert sind, um mit nicht übereinstimmenden Frequenzen betrieben zu werden.

4. QRNG-Generator nach einem der Ansprüche 2 bis 3, ferner umfassend einen Multimode-Interferenzkoppler MMI, bei dem es sich um einen 3x3-MMI-Koppler (11) handelt, der die Ausgangssignale der beiden Laser (L1, L2) zu dem Ausgangssignal der Lichtquelle zusammenführt, das an das erste Interferometer MZI (I1) gesendet wird.

5. QRNG-Generator nach einem der vorhergehenden Ansprüche, ferner umfassend einen Eingang zur Einspeisung einer externen Lichtquelle, für den Fall des Ausfalls der in die PIC-Schaltung integrierten Laserlichtquelle.

6. QRNG-Generator nach Anspruch 4 und 5, wobei der 3x3-MMI-Koppler (11) einen Eingang für die in der PIC-Schaltung integrierte Lichtquelle und einen Eingang für die externe Lichtquelle hat.

7. QRNG-Generator nach einem der Ansprüche 4-6, wobei der 3x3-MMI-Koppler (11) einen externen optischen Ausgang zur Überwachung der in die PIC-Schaltung integrierten Lichtquelle aufweist.

8. QRNG-Generator nach einem der vorhergehenden Ansprüche, wobei der Chip eine Länge von 4 Millimetern und eine Breite von 4,6 Millimetern aufweist.

9. QRNG-Generator nach Anspruch 1, der eine Grundfläche von 9 mm² im Inneren des Chips aufweist.

10. QRNG-Generator nach einem der vorhergehenden Ansprüche, ferner umfassend zwei als 2x2-MMI-Koppler (12, 13) ausgeführte Multimode-Interferenzkoppler, MMI, wobei ein erster 2x2-MMI-Koppler (12) zwischen dem ersten MZI-Interferometer und dem zweiten MZI-Interferometer (I2) angeschlossen ist und ein zweiter 2x2-MMI-Koppler (13) zwischen dem zweiten MZI-Interferometer (I2) und dem Fotodetektor (10) angeschlossen ist.

## Revendications

1. Un générateur quantique de nombres aléatoires (QRNG), comprenant :
intégré dans une puce (100), qui est un circuit intégré photonique, PIC, fabriqué en utilisant la technologie InP, avec des entrées et sorties électriques, les composants suivants connectés depuis le « front end » jusqu'au « back end » du générateur QRNG :
- Une source lumineuse comprenant un premier laser à commutation de gain (L1) intégré au « front end » du générateur QRNG, où le premier laser (L1) est monomode et capable d'atteindre un niveau de bruit quantique entre les impulsions optiques afin d'obtenir un aléa de phase entre les impulsions optiques ;
- Deux interféromètres de Mach-Zehnder (MZI) (I1, 12) connectés en série, dans lesquels un premier interféromètre MZI (I1) est symétrique et configuré pour recevoir le signal de sortie de la source lumineuse et équilibrer la puissance du signal à l'entrée d'un second interféromètre MZI (I2), et dans lequel le second interféromètre MZI (I2) est asymétrique et configuré pour convertir les variations aléatoires de phase entre les impulsions optiques consécutives en variations d'amplitude ; et
- Un photodétecteur unique (10) intégré au « back end » du générateur QRNG et configuré pour détecter les variations d'amplitude des impulsions optiques à la sortie du second interféromètre MZI, convertissant ces variations en signaux électriques à transmettre à l'une des sorties du circuit PIC.

2. Le générateur QRNG selon la revendication 1, dans lequel la source lumineuse intégrée dans le circuit PIC comprend en outre un second laser à commutation de gain (L2) intégré dans le « front end » du générateur QRNG, dont le signal de sortie est combiné avec le signal de sortie du premier laser (L1), dans lequel, les deux lasers (L1, L2) utilisant une cavité Fabry-Perot avec des réflecteurs de Bragg distribués (DBR).

3. Le générateur QRNG selon la revendication 2, dans lequel les deux lasers (L1, L2) sont configurés pour fonctionner avec des fréquences désaccordées.

4. Le générateur QRNG selon l'une quelconque des revendications 2 à 3, comprenant en outre un coupleur à interférence multimode (MMI), qui est un coupleur MMI 3x3 (11) combinant les signaux de sortie des deux lasers (L1, L2) dans le signal de sortie de la source lumineuse envoyé au premier interféromètre MZI (I1).

5. Le générateur QRNG selon l'une quelconque des revendications précédentes, comprenant en outre une entrée pour injecter une source lumineuse externe en cas de défaillance de la source lumineuse laser intégrée dans le circuit PIC.

6. Le générateur QRNG selon les revendications 4 et 5, dans lequel le coupleur MMI 3x3 (11) comporte une entrée pour la source lumineuse intégrée dans le circuit PIC et une entrée pour la source lumineuse externe.

7. Le générateur QRNG selon l'une quelconque des revendications 4 à 6, dans lequel le coupleur MMI 3x3 (11) possède une sortie optique externe pour surveiller la source lumineuse intégrée dans le circuit PIC.

8. Le générateur QRNG selon l'une quelconque des revendications précédentes, dans lequel la puce a des dimensions de 4 millimètres de long sur 4,6 millimètres de large.

9. Le générateur QRNG selon la revendication 1, dans lequel il a une empreinte au sein de la puce de 9 mm².

10. Le générateur QRNG selon l'une quelconque des revendications précédentes, comprenant en outre des coupleurs à interférence multimode, MMI, qui sont deux coupleurs MMI 2x2 (12, 13), dans lesquels un premier coupleur MMI 2x2 (12) est connecté entre le premier interféromètre MZI (11) et le second interféromètre MZI (12), et un second coupleur MMI 2x2 (13) est connecté entre le second interféromètre MZI (12) et le photodétecteur (10).
